# EUROPÄISCHE PATENTSCHRIFT

(11) **EP 2 235 091 B1**
(45) Veröffentlichungstag und Bekanntmachung des Hinweises auf die Patenterteilung: **07.11.2012**
(21) Anmeldenummer: 09703692.5
(22) Anmeldetag: 16.01.2009
(51) Int. Cl.: C08G 77/388

(54) **VERFAHREN ZUR HERSTELLUNG ISOCYANAT-TERMINIERTER SILOXANE**
METHOD FOR PRODUCING ISOCYANATE-TERMINATED SILOXANES
PROCÉDÉ DE PRODUCTION DE SILOXANES À TERMINAISONS ISOCYANATE

(30) Priorität: 23.01.2008 DE 102008000140
(43) Veröffentlichungstag der Anmeldung: 06.10.2010
(73) Patentinhaber: Wacker Chemie AG, 81737 München (DE)
(72) Erfinder: CREMER, Jens, 81379 München (DE)
(74) Vertreter: Gössmann, Christoph Tassilo
(86) Internationale Anmeldenummer: PCT/EP2009/050458
(87) Internationale Veröffentlichungsnummer: WO 2009/092665

(56) Entgegenhaltungen:
- WO-A-03/018658
- DE-A1-102005 032 948

## Beschreibung

Die Erfindung betrifft ein Verfahren zur Herstellung Isocyanat-terminierter Siloxane.

Isocyanat-terminierte Siloxane sind wertvolle Ausgangsmaterialien, da sie die Eigenschaften von Siloxanen mit der hohen Reaktivität von Isocyanaten kombinieren und somit für die Herstellung von siliconhaltigen Polyurethanen oder -harnstoffen geeignet sind.

Der aktuelle Stand der Technik beschreibt vielfältige Methoden zur Herstellung von Isocyanat-terminierten Siloxanen wie in folgenden Literaturstellen angegeben:

US 3170891 beschreibt die Herstellung Isocyanat-terminierter Siloxane durch die Hydrosilylierung von ungesättigten Isocyanaten mit Si-H-terminierten Siloxanen. Nachteilig sind jedoch die hohen Rohstoffkosten, die durch die Verwendung der Si-H-Siloxane als auch des benötigten Platinkatalysators resultieren. Darüber hinaus ist die Reaktion nicht quantitativ und durch die Entstehung zahlreicher Nebenprodukte charakterisiert.

US 3179622 beschreibt die Synthese aus Amin- oder Carbinolfunktionalisierten Siloxanen und Diisocyanaten. Die so erhaltenen Isocyanat-terminierten Siloxane sind jedoch nicht vollständig frei von den giftigen monomeren Diisocyanaten. Darüber hinaus weisen diese Siloxane auch Harnstoff- oder Urethaneinheiten in der Kette auf, die sich nachteilig auf die Viskosität und Lagerstabilität dieser Materialien auswirken.

US 5886205 beschreibt die Darstellung von Isocyanat-terminierten Siloxanen mittels Pyrolyse von Urethanen-Siloxanen, die durch die Reaktion von Amin-funktionalisierten Siloxanen mit Diorganocarbonaten erhalten worden sind. Aufgrund der relativ drastischen Reaktionsbedingungen führt diese Synthese zu einer Reihe von Nebenprodukten. In abgewandelter Form beschäftigt sich JP 2001-48855 mit dieser Synthese. Durch die Verwendung von Diarylacarbonaten werden zwar hohe Ausbeuten an Isocyanat-terminierten Siloxanen erhalten, jedoch sind die Reaktionszeiten sehr lang und hochmolekulare Siloxane sind mit dieser Methode nur sehr schwer zugänglich.

Eine direkte Synthese der Isocyanat-terminierten Siloxane mittels Phosgenierung entsprechender Amin-funktionalisierter Siloxane ist aufgrund des bei der Reaktion freiwerdenden HCls nicht möglich. Gemäß US 5886205 führt diese starke Säure während der Reaktion zum Abbau der Siloxankette. Ein Abfangen des HCls mittels tertiären Aminen als Basen wie es in der japanischen Veröffentlichung 5-5713 (1993) beschrieben ist, ist im technischen Maßstab nicht praktikabel.

EP 1780213 beschreibt ein zweistufiges Herstellungsverfahren von Isocyanat-terminierten Siloxanen, in dem zunächst Aminfunktionalisierte Siloxane mit Carbonyl-bis-azoliden zu Siloxan-Harnstoff-Azoliden umgesetzt werden. Diese werden dann anschließend thermisch zu den entsprechenden Isocyanat-terminierten Siloxanen pyrolysiert. Nachteilig ist das zweistufige Verfahren, welches darüber hinaus teuere Rohstoffe benötigt.

Aufgabe der Erfindung war deshalb die Entwicklung eines Verfahrens, welches einen schnellen und kostengünstigen Zugang zu Isocyanat-terminierten Siloxanen ermöglicht.

In WO 03/18658 und WO 03/14226 werden zur Funktionalisierung von Organopolysiloxanen sowie organischen Polymeren funktionalisierte Alkoxysilane eingesetzt, die sich dadurch auszeichnen, dass die Alkoxysilylgruppe durch einen Methylenspacer von einem Heteroatom, z.B. Sauerstoff oder Stickstoff, getrennt ist und durch die räumliche Nähe dieser beiden Gruppen die Reaktivität der Silane bezüglich Hydrolyse und Kondensation der Silyleinheit erheblich gesteigert ist. Die erhöhte Reaktivität derartiger sog. "α-Silane" mit Methylenspacer ist auch in Monatsh. Chem. 2003, 134, 1081-1092 beschrieben.

Bislang sind derartige hochreaktive α-Silane eingesetzt worden, um silanfunktionelle (Pre-)Polymere herzustellen, die eine entsprechend erhöhte Reaktivität gegenüber Feuchtigkeit aufweisen und somit zur Herstellung von luftfeuchtigkeitshärtenden Massen geeignet sind.

Gegenstand der Erfindung ist ein Verfahren zur Herstellung von Isocyanat-terminierten Siloxanen durch die Reaktion von Si-OH-terminierten, gegebenenfalls verzweigten Siloxanen (A), die Einheiten der Formel (I) enthalten:

RₐR¹_{b}(R²O)_{c}SiO_{4-a-b-c/2} (I),

wobei
R einen einwertigen, SiC-gebundenen, gegebenenfalls substituierten Kohlenwasserstoffrest, der durch Sauerstoffatome unterbrochen sein kann, bedeutet,
R¹ eine Si-gebundene Hydroxylgruppe bedeutet,
R² gleich oder verschieden sein kann und einen einwertigen, gegebenenfalls substituierten Kohlenwasserstoffrest, der durch Heteroatome unterbrochen sein kann, bedeutet,
a 0, 1, 2 oder 3 ist,
b 0, 1, 2 oder 3 ist und
c 0, 1, 2 oder 3 ist,
mit der Maßgabe, dass die Summe a+b+c≤3 ist und mindestens eine Einheit mit b verschieden von 0 anwesend ist,
mit reaktiven, gegebenenfalls geschützten Isocyanataufweisenden α-Silanen

(R²O)ₙR¹ₘSi-CH₂-NR³ (II)

umgesetzt, wobei
R¹ und R² die obige Bedeutung haben
R³ CO oder H-CO-Z bedeutet,
wobei Z einen einwertigen, gegebenenfalls substituierten Kohlenwasserstoffrest, der durch Heteroatome unterbrochen sein kann, bedeutet
n 1, 2 oder 3 ist und
m 0, 1, oder 2 ist,
mit der Maßgabe, dass die Summe m+n=3 ist.

Im Rahmen der vorliegenden Erfindung sollen von dem Begriff Siloxane sowohl polymere, oligomere wie auch dimere Siloxane mitumfasst werden.
Bei dem erfindungsgemäßen Verfahren werden Si-OH-terminierte, gegebenenfalls verzweigte Siloxane (A) eingesetzt, die Einheiten der Formel (I) enthalten:

RₐR¹_{b}(R²O)_{c}SiO_{4-a-bc/2} (I),

wobei
R einen einwertigen, SiC-gebundenen, gegebenenfalls substituierten Kohlenwasserstoffrest, der durch Sauerstoffatome unterbrochen sein kann, bedeutet,
R¹ eine Si-gebundene Hydroxylgruppe bedeutet,
R² gleich oder verschieden sein kann und einen einwertigen, gegebenenfalls substituierten Kohlenwasserstoffrest, der durch Heteroatome unterbrochen sein kann, bedeutet,
a 0, 1, 2 oder 3 ist,
b 1, 2 oder 3 ist und
c 0, 1, 2 oder 3 ist,
mit der Maßgabe, dass die Summe a+b+c≤3 ist und mindestens eine Einheit mit b verschieden von 0 anwesend ist.

Beispiele für R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Bevorzugt handelt es sich bei Rest R um einwertige, gegebenenfalls substituierte Kohlenwasserstoffreste mit 1 bis 40 Kohlenstoffatomen, besonders bevorzugt um Kohlenwasserstoffreste mit 1 bis 30 Kohlenstoffatomen, insbesondere um Kohlenwasserstoffreste mit 1 bis 6 Kohlenstoffatomen.

Beispiel für eine Si-gebundene Hydroxylgruppe R¹ ist eine Silanolgruppe.

Beispiele für substituierte Kohlenwasserstoffreste R² sind Methoxymethylenreste, Ethoxymethylenreste, Dimethylaminomethylen und Diethylaminomethylen.

Bevorzugt handelt es sich um einen Methoxymethylenrest.

Beispiele für Z sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest, bevorzugt sind der Methyl-, Ethyl-, n-Propyl- , iso-Propyl-, n-Butyl-, iso-Butyl-, tert.-Butylrest, besonders bevorzugt ist der Methylrest.

Bevorzugt handelt es sich bei Rest R² um einwertige, gegebenenfalls substituierte Kohlenwasserstoffreste mit 1 bis 40 Kohlenstoffatomen, besonders bevorzugt um Kohlenwasserstoffreste mit 1 bis 30 Kohlenstoffatomen, insbesondere um Kohlenwasserstoffreste mit 1 bis 6 Kohlenstoffatomen.

Die Siloxane (A) werden im erfindungsgemäßen Verfahren mit reaktiven α-Silanen der Formel

(R²O)ₙR¹ₘSi-CH₂-NCO (II)

umgesetzt, wobei
R¹ und R² die obige Bedeutung haben,
n 1, 2 oder 3 ist und
m 0, 1, oder 2 ist,
mit der Maßgabe, dass die Summe m+n=3 ist.

Bei der Umsetzung der Siloxane (A) mit den α-Silanen der Formel (II) werden damit direkt NCO-terminierte Siloxane (B) erhalten.

In der bevorzugten Ausführung dieses Verfahrens wird als α-Silan Methoxy-dimethyl (methylisocyanato)-silan eingesetzt.

In einer weiteren Ausführung des erfindungsgemäßen Verfahrens werden die Siloxane (A) mit reaktiven, geschützten α-Silanen der Formel

(R²0)ₙR¹ₘSi-CH₂-NH-CO-Z (III)

umgesetzt, wobei
R¹ und R² die obige Bedeutung haben,
n 1, 2 oder 3 ist und
m 0, 1, oder 2 ist,
mit der Maßgabe, dass die Summe m+n=3 ist und Z einen einwertigen, gegebenenfalls substituierten Kohlenwasserstoffrest, der durch Heteroatome unterbrochen sein kann, bedeutet.

Bei der Umsetzung mit den geschützten α-Silanen der Formel (III) werden geschützte, Isocyanat-terminierte Siloxane (B1) erhalten. Diese Siloxane (B1) können anschließend unter thermischer Belastung zu den entsprechenden freien NCO-terminierten Siloxanen (B) unter Freisetzung der Schutzgruppe pyrolysiert werden.

Die Umsetzung der Siloxane (A) mit den α-Silanen der Formel (II) erfolgt bevorzugt in Gegenwart einer Brönstedt-Säure. Beispiel für geeignete Säuren sind z.B. Phosphorsäure, Monoisopropylphosphat, Dibutylphosphat, Toluolsulfonsäure oder Methylsulfonsäure.

Bevorzugt ist die Verwendung von Phosphorsäure.

Das erfindungsgemäße Verfahren wird bevorzugt in Gegenwart von Phosphorsäure durchgeführt.

Die α-Silane werden bezogen auf die Si-gebundenen Hydroxylgruppen R¹ der Siloxane (A) in Mengen von 50 mol-% bis 200 mol-%, bevorzugt 75 mol-% bis 150 mol-%, insbesondere 90 mol-% bis 120 mol-% eingesetzt.
Für das erfindungsgemäße Verfahren werden die α-Silane bevorzugt in stöchiometrischen Mengen bezogen auf die Si-gebundenen Hydroxylgruppen R¹ der Siloxane (A) verwendet.

Die verwendete Säure wird dabei vorzugsweise in Mengen bezüglich des Siloxans (A) von 0,01 bis 2 Gew.-%, bevorzugt 0,01 bis 1,0 Gew.-%, besonders bevorzugt 0,01 bis 0,5 Gew.-% zugegeben.

Die Umsetzung der Siloxane (A) mit den α-Silanen erfolgt vorzugsweise bei Temperaturen von -50 °C bis 120 °C, bevorzugt -30 °C bis 100 °C, besonders bevorzugt 0 °C bis 60 °C.

Das erfindungsgemäße Verfahren wird bevorzugt bei Raumtemperatur durchgeführt.

Die Umsetzung der Siloxane(A) mit den α-Silanen wird durch das Anlegen eines Unterdrucks beschleunigt. Die Reaktion wird bevorzugt bei einem angelegten Vakuum von 0,1 mbar bis 1000 mbar, besonders bevorzugt 1 mbar bis 500 mbar und ganz besonders bevorzugt bei 10 mbar bis 300 mbar durchgeführt.

Das erfindungsgemäße Verfahren wird bevorzugt bei 250 mbar durchgeführt.

Das erfindungsgemäße Verfahren kann in Gegenwart eines Lösungsmittels (L) durchgeführt werden, welches gegenüber der Reaktion mit Isocyanaten und Alkoxysilanen inert ist. Beispiele für geeignete Lösungsmittel (L) sind Ether, insbesondere aliphatische Ether, wie Dimethylether, Diethylether, Methyl-t-butylether, Diisopropylether, Dioxan oder Tetrahydrofuran, Ester, insbesondere aliphatische Ester, wie Ethylacetat oder Butylacetat, Ketone, insbesondere aliphatische Ketone, wie Aceton oder Methylethylketon, Amide wie DMF, aromatische Kohlenwasserstoffe wie Toluol oder Xylol, aliphatische Kohlenwasserstoffe wie Pentan, Cyclopentan, Hexan, Cyclohexan, Heptan, Chlorkohlenwasserstoffe wie Methylenchlorid oder Chloroform.

Das Lösungsmittel wird dabei bezogen auf das Siloxan (A) in 0 Gew.-% bis 1000 Gew.-%, besonders bevorzugt 0 Gew.-% bis 500 Gew.-%, insbesondere 0 Gew.-% bis 100 Gew.-% dem Reaktionsgemisch beigegeben.

Das erfindungsgemäße Verfahren wird bevorzugt lösungsmittelfrei durchgeführt.

Das erfindungsgemäße Verfahren hat den Vorteil, dass Isocyanat-terminierte Siliconöle in einem einstufigen Prozess direkt erhalten werden können.

Darüber hinaus hat das erfindungsgemäße Verfahren den Vorteil, dass kostengünstige Rohstoffe verwendet werden können.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 mbar, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1:

In einem ausgeheizten 100 ml Rundkolben wurden unter Schutzgasatmosphäre 11,73 g (90,9 mmol) Isocyanatomethylmethoxy-dimethyl-silan und 100 mg wasserfreie Phosphorsäure vorgelegt. Im Anschluss daran wurden 50,00 g eines linearen Siloxans der Formel HO-[(CH₃)₂-SiO]₁₄Si(CH₃)₂-OH bei Raumtemperatur und einem Vakuum von 250 mbar langsam zugetropft. Nach beendeter Reaktion wurde das Reaktionsgemisch noch weitere 30 min nachgerührt, so dass schließlich 58,8 g des NCO-terminierten Siloxans erhalten werden konnten.

### Beispiel 2:

In einem ausgeheizten 100 ml Rundkolben wurden unter Schutzgasatmosphäre 4,30 g (33,3 mmol) Isocyanatomethylmethoxy-dimethyl-silan und 100 mg wasserfreie Phosphorsäure vorgelegt. Im Anschluss daran wurden 50,00 g eines linearen Siloxans der Formel HO-[(CH₃)₂-SiO]₃₉Si(CH₃)₂-OH bei Raumtemperatur und einem Vakuum von 250 mbar langsam zugetropft. Nach beendeter Reaktion wurde das Reaktionsgemisch noch weitere 30 min nachgerührt, so dass schließlich 53,2 g des NCO-terminierten Siloxans erhalten werden konnten.

### Beispiel 3:

In einem ausgeheizten 100 ml Rundkolben wurden unter Schutzgasatmosphäre 14,63 g (90,9 mmol) [(Methoxy-dimethyl-silanyl)-methyl]-carbaminsäure-methylester und 100 mg wasserfreie Phosphorsäure vorgelegt. Im Anschluss daran wurden 50,00 g eines linearen Siloxans der Formel HO-[(CH₃)₂-SiO]₁₄Si(CH₃)₂-OH bei Raumtemperatur und einem Vakuum von 250 mbar langsam zugetropft. Nach beendeter Reaktion wurde das Reaktionsgemisch noch weitere 30 min nachgerührt, so dass schließlich 61,7 g des Methylcarbamat-geschüzten Siloxans erhalten werden konnten.

### Beispiel 4:

In einem ausgeheizten 100 ml Rundkolben wurden unter Schutzgasatmosphäre 5,36 g (33,3 mmol) [(Methoxy-dimethylsilanyl)-methyl]-carbaminsäure-methylester und 100 mg wasserfreie Phosphorsäure vorgelegt. Im Anschluss daran wurden 50,00 g eines linearen Siloxans der Formel HO-[(CH₃)₂-SiO]₃₉Si(CH₃)₂-OH bei Raumtemperatur und einem Vakuum von 250 mbar langsam zugetropft. Nach beendeter Reaktion wurde das Reaktionsgemisch noch weitere 30 min nachgerührt, so dass schließlich 54,4 g des Methylcarbamat-geschüzten Siloxans erhalten werden konnten.

## Patentansprüche

1. Verfahren zur Herstellung von Isocyanat-terminierten Siloxanen durch die Reaktion von Si-OH-terminierten, gegebenenfalls verzweigten Siloxanen (A), die Einheiten der Formel (I) enthalten:
RₐR¹_{b}(R²O)_{c}SiO_{4-a-b-c/2} (I),
wobei
R einen einwertigen, SiC-gebundenen, gegebenenfalls substituierten Kohlenwasserstoffrest, der durch Sauerstoffatome unterbrochen sein kann, bedeutet,
R¹ eine Si-gebundene Hydroxylgruppe bedeutet,
R² gleich oder verschieden sein kann und einen einwertigen, gegebenenfalls substituierten Kohlenwasserstoffrest, der durch Heteroatome unterbrochen sein kann, bedeutet,
a 0, 1, 2 oder 3 ist,
b 0, 1, 2 oder 3 ist und
c 0, 1, 2 oder 3 ist,
mit der Maßgabe, dass die Summe a+b+c≤3 ist und mindestens eine Einheit mit b verschieden von 0 anwesend ist,
mit reaktiven, gegebenenfalls geschützten Isocyanataufweisenden α-Silanen
(R²O)ₙR¹ₘSi-CH₂-NR³ (II)
wobei
R¹ und R² die obige Bedeutung haben,
R³ CO oder H-CO-Z bedeutet,
wobei Z einen einwertigen, gegebenenfalls substituierten Kohlenwasserstoffrest, der durch Heteroatome unterbrochen sein kann, bedeutet
n 1, 2 oder 3 ist und
m 0, 1, oder 2 ist,
mit der Maßgabe, dass die Summe m+n=3 ist.

2. Verfahren zur Herstellung von Isocyanat-terminierten Siloxanen nach Anspruch 1, **dadurch gekennzeichnet, dass** als α-Silan Methoxy-dimethly-(methylisocyanato)-silan eingesetzt wird.

3. Verfahren zur Herstellung von Isocyanat-terminierten Siloxanen nach Anspruch 1 oder 2, **dadurch gekennzeichnet, dass** die Umsetzung der Siloxane (A) mit den α-Silanen der Formel (II) in Gegenwart einer Brönstedt-Säure erfolgt.

4. Verfahren zur Herstellung von Isocyanat-terminierten Siloxanen nach Anspruch 3, **dadurch gekennzeichnet, dass** es sich bei der Brönstedt-Säure um Phosphorsäure, Monoisoproylphosphat, Dibutylphosphat, Toluolsulfonsäure oder Methylsulfonsäure oder deren beliebige Mischungen handelt.

5. Verfahren zur Herstellung von Isocyanat-terminierten Siloxanen nach Anspruch 3 oder 4, **dadurch gekennzeichnet, dass** die Brönstedt-Säure in Mengen, bezogen auf das Siloxan (A), von 0,01 bis 1 Gew.-% eingesetzt wird.

6. Verfahren zur Herstellung von Isocyanat-terminierten Siloxanen nach einem oder mehreren der Ansprüche 1 bis 5, **dadurch gekennzeichnet, dass** die Umsetzung der Siloxane (A) mit den α-Silanen bei Temperaturen von -20 °C bis 100 °C erfolgt.

7. Verfahren zur Herstellung von Isocyanat-terminierten Siloxanen nach einem oder mehreren der Ansprüche 1 bis 6, **dadurch gekennzeichnet, dass** die Umsetzung der Siloxane (A) mit den α-Silanen bei einem angelegten Vakuum von 0,1 mbar bis 800 mbar erfolgt.

## Claims

1. Process for preparing isocyanate-terminated siloxanes by reaction of Si-OH-terminated, branched or unbranched siloxanes (A) containing units of the formula (I):
RₐR¹_{b}(R²O)_{c}SiO_{4-a-b-c/2} (I),
where
R is a monovalent, SiC-bonded, substituted or unsubstituted hydrocarbon radical which may be interrupted by oxygen atoms,
R¹ is an Si-bonded hydroxyl group,
the radicals R² can be identical or different and are each a monovalent, substituted or unsubstituted hydrocarbon radical which may be interrupted by heteroatoms,
a is 0, 1, 2 or 3,
b is 0, 1, 2 or 3 and
c is 0, 1, 2 or 3,
with the proviso that the sum a + b + c ≤ 3 and at least one unit having b different from 0 is present,
with reactive, optionally protected isocyanate-comprising α-silanes
(R²O)ₙR¹ₘSi-CH₂-NR³ (II),
where
R¹ and R² are as defined above,
R³ is CO or H-CO-Z,
where Z is a monovalent, substituted or unsubstituted hydrocarbon radical which may be interrupted by heteroatoms,
n is 1, 2 or 3 and
m is 0, 1 or 2,
with the proviso that the sum m + n = 3.

2. Process for preparing isocyanate-terminated siloxanes according to Claim 1, **characterized in that** methoxydimethyl(methylisocyanato)silane is used as α-silane.

3. Process for preparing isocyanate-terminated siloxanes according to Claim 1 or 2, **characterized in that** the reaction of the siloxanes (A) with the α-silanes of the formula (II) is carried out in the presence of a Brönsted acid.

4. Process for preparing isocyanate-terminated siloxanes according to Claim 3, **characterized in that** the Brönsted acid is phosphoric acid, monoisopropylphosphate, dibutylphosphate, toluenesulfonic acid or methylsulfonic acid or any mixture thereof.

5. Process for preparing isocyanate-terminated siloxanes according to Claim 3 or 4, **characterized in that** the Brönsted acid is used in amounts, based on the siloxane (A), of from 0.01 to 1% by weight.

6. Process for preparing isocyanate-terminated siloxanes according to one or more of Claims 1 to 5, **characterized in that** the reaction of the siloxanes (A) with the α-silanes is carried out at temperatures of from -20°C to 100°C.

7. Process for preparing isocyanate-terminated siloxanes according to one or more of Claims 1 to 6, **characterized in that** the reaction of the siloxanes (A) with the α-silanes is carried out at an applied vacuum of from 0.1 mbar to 800 mbar.

## Revendications

1. Procédé pour la préparation de siloxanes à terminaison isocyanate par la réaction de siloxanes (A) à terminaison Si-OH, éventuellement ramifiés, qui contiennent des unités de formule (I) :
RₐR¹_{b}(R²O)_{c}SiO_{4-a-b-c/2} (I),
dans laquelle
R représente un radical hydrocarboné monovalent éventuellement substitué, lié par une liaison Si-C, qui peut être interrompu par des atomes d'oxygène,
R¹ représente un groupe hydroxy lié à Si,
R² peut être le même ou différent et représente un radical hydrocarboné monovalent, éventuellement substitué, qui peut être interrompu par des hétéroatomes,
a est 0, 1, 2 ou 3,
b est 0, 1, 2 ou 3 et
c est 0, 1, 2 ou 3,
étant entendu que la somme a+b+c est ≤ 3 et qu'au moins une unité où b est différent de 0 est présente,
avec des α-silanes réactifs, comportant éventuellement des groupes isocyanate protégés
(R²O)ₙR¹ₘSi-CH₂-NR³ (II),
R¹ et R² ayant la signification ci-dessus,
R³ représentant CO ou H-CO-Z,
Z représentant un radical hydrocarboné monovalent,
éventuellement substitué, qui peut être interrompu par des hétéroatomes,
n étant 1, 2 ou 3 et
m étant 0, 1 ou 2,
étant entendu que la somme m+n est égale à 3.

2. Procédé pour la préparation de siloxanes à terminaison isocyanate selon la revendication 1, **caractérisé en ce que** comme α-silane on utilise le méthoxy-diméthyl-(méthylisocyanato)-silane.

3. Procédé pour la préparation de siloxanes à terminaison isocyanate selon la revendication 1 ou 2, **caractérisé en ce que** la réaction des siloxanes (A) avec les α-silanes de formule (II) s'effectue en présence d'un acide de Brônsted.

4. Procédé pour la préparation de siloxanes à terminaison isocyanate selon la revendication 3, **caractérisé en ce que** l'acide de Brönsted consiste en acide phosphorique, phosphate de mono-isopropyle, phosphate de dibutyle, acide toluènesulfonique ou acide méthylsulfonique ou en des mélanges quelconques de ceux-ci.

5. Procédé pour la préparation de siloxanes à terminaison isocyanate selon la revendication 3 ou 4, **caractérisé en ce qu'**on utilise l'acide de Brônsted en des quantités de 0,01 à 1 % en poids, par rapport au siloxane (A).

6. Procédé pour la préparation de siloxanes à terminaison isocyanate selon une ou plusieurs des revendications 1 à 5, **caractérisé en ce que** la réaction des siloxanes (A) avec les α-silanes s'effectue à des températures de -20 °C à 100 °C.

7. Procédé pour la préparation de siloxanes à terminaison isocyanate selon une ou plusieurs des revendications 1 à 6, **caractérisé en ce que** la réaction des siloxanes (A) avec les α-silanes s'effectue sous un vide appliqué de 0,1 mbar à 800 mbars.
